# EUROPÄISCHE PATENTSCHRIFT

(11) **EP 1 408 096 B1**
(45) Veröffentlichungstag und Bekanntmachung des Hinweises auf die Patenterteilung: **15.11.2006**
(21) Anmeldenummer: 03020324.4
(22) Anmeldetag: 09.09.2003
(51) Int. Cl.: C09J 7/02, B32B 27/08

(54) **Verwendung eines Folien-Verbundes.**
Use of a multilayered film.
Utilisation d'une feuille multicouche.

(30) Priorität: 08.10.2002 DE 10246862
(43) Veröffentlichungstag der Anmeldung: 14.04.2004
(73) Patentinhaber: Huhtamaki Forchheim Zweigniederlassung der Huhtamaki Deutschland GmbH & Co. KG, 91301 Forchheim (DE)
(72) Erfinder: Fürst, Michael, 91301 Forchheim (DE)
(74) Vertreter: Hutzelmann, Gerhard

(56) Entgegenhaltungen:
- EP-A- 0 460 841
- EP-A- 0 882 576
- WO-A-93/11933
- US-A- 4 609 589
- US-A- 5 962 098

## Beschreibung

Die Erfindung bezieht sich auf die Verwendung eines Folien-Verbundes mit wenigstens zwei Schichten als Releasefolie für ölhaltige Bahnen.

Es ist eine Vielzahl verschiedener Folien-Verbunde bekannt. Jedoch besteht entweder das Problem, daß die Verbunde keine Barriereeigenschaften gegenüber Ölen, insbesondere mineralischen Ölen aufweisen oder aber wenig stabil sind, d.h. spleißempfindlich sind, schlechte Weiterreisseigenschaften aufweisen, thermisch und/oder mechanisch wenig stabil sind.

So sind aus der EP-A-0460841 ebenso wie aus der US-A-5962098, der US-A-4609589, der WO-A-9311933 und der EP-A-0882576 jeweils Releasefolien bekannt, die mehrere Schichten enthalten.

Der Erfindung liegt die Aufgabe zugrunde, einen Folienverbund zu schaffen, dessen Eigenschaften in weiten Bereichen einstellbar sind, der Barriereeigenschaften gegenüber Ölen aufweisen kann und/oder mechanisch und thermisch stabil ist und damit als Releasefolie für bituminöse Bahnen verwendbar ist.

Diese Aufgabe wird erfindungsgemäß dadurch gelöst, daß wenigstens die beiden Folienschichten aus unterschiedlichen Materialien, nämlich aus einem Polyolefin, aus Polypropylen, aus Polyamid, aus Polyethylenterephtalat, aus Polyacrylnitril und/oder aus einer Mischung oder einem Blend dieser Stoffe bestehen, wobei wenigstens eine Seite des Verbundes gering haftend ausgerüstet ist, wobei wenigstens eine der Folienschichten des Verbundes als Barriere gegen insbesondere mineralische Öle ausgebildet ist.

Durch die Kombination verschiedener Materialien können vorteilhafte Eigenschaften der Materialien vereinigt werden, wodurch erst die gewünschte Verwendung ermöglicht wird.

Dabei hat es sich als sehr vorteilhaft erwiesen, wenn die Folienschichten unterschiedliche Wärmeausdehnungskoeffizienten aufweisen.

Hiermit kann ein Folienverbund geschaffen werden, der bei Erwärmung sich entweder von einem Träger löst, oder sich selbst anpresst.

Dabei hat es sich als äußerst vorteilhaft erwiesen, wenn die PET-Schicht orientiert ist.

Damit können die mechanischen Eigenschaften der PET-Schicht in weiten Grenzen eingestellt werden, wodurch die Verwendung nochmals optimiert werden kann.

Eine sehr vorteilhafte Ausgestaltung liegt auch darin, daß wenigstens eine Seite des Verbundes mit Silikon ausgerüstet ist.

Silikon weist sehr gute Releaseeigenschaften auf.

Als sehr vorteilhaft hat es sich erwiesen, wenn das Antihaftmittel auf den Verbund beschichtet ist.

Dadurch kann das Antihaftmittel besonders gut an den gewünschten Stellen aufgebracht werden.

Es hat sich aber auch als sehr vorteilhaft erwiesen, wenn das Antihaftmittel in die äußerste Folienschicht eingebracht ist.

Hiermit wird der Arbeitsschritt des Beschichtens des Verbundes mit Antihaftmittel eingespart.

Eine weitere sehr vorteilhafte Ausgestaltung liegt auch darin, daß zwischen zwei aufeinander folgenden Schichten eine Barriereschicht insbesondere für Öle, Sauerstoff und/oder UV Strahlung vorgesehen ist.

Es ist auch sehr vorteilhaft, wenn eine Lackschicht als Barriere insbesondere für Öle, Sauerstoff und/oder UV Strahlung vorgesehen ist.

Die Anordnung einer Barriereschicht verhindert die Diffusion von Ölen und/oder Sauerstoff durch den Folienaufbau hindurch. Zusätzlich werden durch eine Barriere gegen UV-Strahlung schädliche Wirkungen vermieden. Durch die Barriere wird z.B. ein Austrocken einer mit dem Verbund abgedeckten ölhaltigen Masse verhindert, so daß die Klebkraft der ölhaltigen Masse länger erhalten bleibt. Zusätzlich wird ein Vergilben des Folienverbundes vermieden. Desweiteren verhindert die Barriereschicht ein Quellen der restlichen Folienschichten, was eine wellige und runzelige Kleberoberfläche vermeidet. Die vorgenannten Barrieren können kombiniert oder auch je nach Einsatzzweck getrennt eingesetzt werden.

Es hat sich erfindungsgemäß auch als sehr vorteilhaft erwiesen, daß die einzelnen Folienschichten nach ihrer thermischen Stabilität kombiniert sind.

Hierdurch kann die thermische Stabilität des gesamten Verbundes beeinflusst werden.

Eine weitere ebenfalls vorteilhafte Ausgestaltung der Erfindung liegt darin, daß die einzelnen Folienschichten nach ihrer mechanischen Festigkeit kombiniert sind.

Damit lässt sich die mechanische Festigkeit des Verbundes vorbestimmen.

Es ist auch sehr vorteilhaft, wenn die einzelnen Folienschichten nach ihren Spleissempfindlickeiten und/oder Weiterreisseigenschaften kombiniert sind.

Hierdurch kann auf spezielle Anforderungen bei der Anwendung des Verbundes eingegangen werden. Es können z.B. die Spleiß- und Weiterreisseigenschaften des Verbundes insbesondere bei asymmetrischen Verbunden durch kontrollierte Delamination eingestellt werden.

Eine weitere vorteilhafte Ausgestaltung der Erfindung ist auch darin zu sehen, daß zwischen zwei aufeinander folgenden Schichten ein Haftvermittler und/oder Kleber vorgesehen ist.

Damit wird der Zusammenhalt des Verbundes verbessert, bzw. auch die Möglichkeit geschaffen normal nicht aneinander haftende Schichten miteinander zu verbinden.

Eine besonders vorteilhafte Weiterbildung der Erfindung ist es auch, wenn eine weiter von der wenig haftenden Oberfläche entfernt liegende Folienschicht einen größeren Längenausdehnungskoeffizienten aufweist als eine näher liegende Folienschicht.

Dadurch wird wirkungsvoll ein Ablösen des Verbundes von dem abzudeckenden Gegenstand sichergestellt. Die Ränder der Verbundes werden durch die auftretenden Kräfte gegen den Gegenstand gedrückt.

Es hat sich als sehr vorteilhaft erwiesen, wenn der Verbund als Releasefolie für bituminöse Bahnen vorgesehen ist.

Ebenfalls sehr vorteilhaft ist es, wenn der Verbund als Releasefolie für selbstklebende Abdichtbahnen, insbesondere Dachbahnen oder dgl. vorgesehen ist.

Besonders bei bituminösen Bahnen, wie sie oftmals zur Abdichtung von Dächeren verwendet werden, ist der erfindungsgemäße Verbund besonders geeignet. Eine Klebkraftverringerung und ein Austrocknen der bituminösen Masse wird verhindert. Zudem lassen sich die Bahnen leicht verarbeiten und es fällt wenig Abfall durch den Release-Liner an.

Eine weitere sehr vorteilhafte Verwendung liegt auch darin, daß der Verbund als Releasefolie für Schweißbahnen, insbesondere mit selbstklebend ausgerüsteter Überlappung, vorgesehen ist.

Für Schweißbahnen gilt das zu Dachbahnen gesagte.

Die Erfindung wird anhand eines Ausführungsbeispiels veranschaulicht. Dabei zeigt:
- Fig. 1: einen Schnitt durch einen erfindungsgemäßen Drei-Schicht-Verbund,
- Fig. 2: einen Schnitt durch einen erfindungsgemäßen Zwei-Schicht-Verbund und
- Fig. 3: einen erfindungsgemäßen Verbund, der auf eine Dachbahn aufgebracht ist.

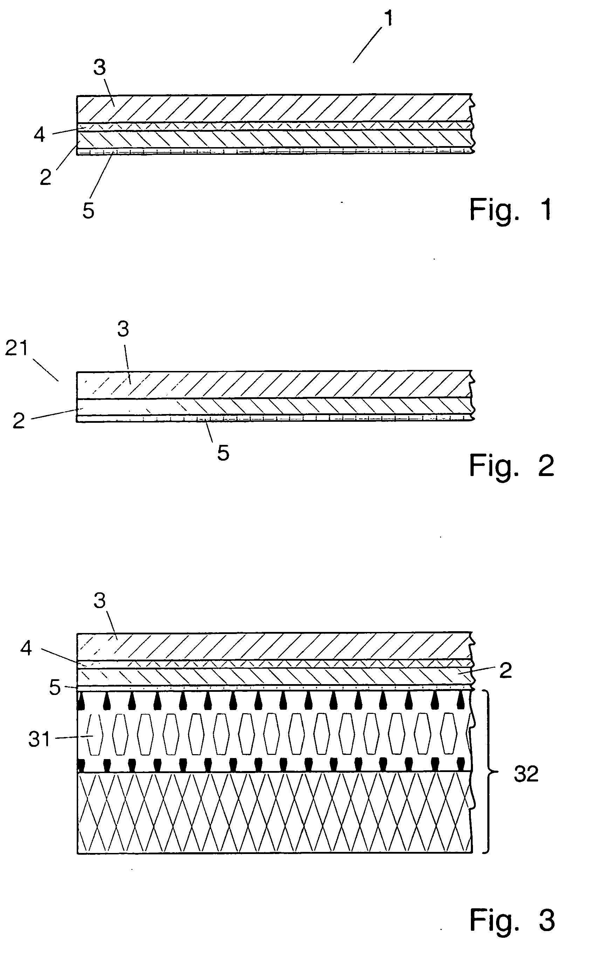

Mit 1 ist in Fig. 1 ein Verbund bezeichnet, der eine erste Kunststoffschicht 2 und eine zweite Schicht 3 aufweist. Die beiden Schichten 2 und 3 können aus einem Polyolefin, Polypropylen, Polyamid, Polyethylenterephthalat und/oder Polyacrylnitril hergestellt sein. Es ist auch denkbar, daß wenigstens eine der beiden Schichten bei der Herstellung orientiert wurde. Zwischen den Schichten 2 und 3 ist eine Barriereschicht 4 angeordnet, die aus einem Lack oder einem geeigneten Kunststoff bestehen kann. Diese Barriereschicht verhindert ein Durchdringen von Ölen, Sauerstoff und/oder UV-Strahlung. Auf der Oberfläche der Schicht 2 ist eine Silikonbeschichtung 5 vorgesehen. Dabei ist es aber auch denkbar, daß ein anderes Mittel zur Haftverminderung verwendet werden kann, oder daß ein entsprechendes Mittel in die Schicht 2 eingemischt ist.

Der Verbund 1 deckt eine bituminöse Masse 31 einer Dachbahn 32 oder dergleichen ab, wie dies in Fig. 3 dargestellt ist.

Durch die Barriereeigenschaften der Barriereschicht 4 wird ein Ausdiffundieren von in der bituminösen Masse 31 enthaltenen Ölen verhindert. Zudem wird ein Aushärten durch den Zutritt von Sauerstoff und UV-Strahlung unterbunden. Speziell eingestellte Spleiss- und Weiterreisseigenschaften des Verbundes 1 erleichtern die Verarbeitung der Dachbahn 32. Eine passende Kombination der einzelnen Schichten des Verbundes 1 lässt es auch zu, entsprechend den jeweiligen Anforderungen thermische und mechanische Eigenschaften des Verbundes 1 in weiten Grenzen einzustellen. Wird der Verbund 1 z.B. bei geringer Spleissempfindlickeit sehr dünn ausgebildet, so fällt bei der Verarbeitung der Dachbahn 32 wenig Abfall an. Der Verbleibende Abfall, der Verbund 1, kann leicht entsorgt werden.

Desweiteren ist es auch denkbar, daß z.B. die Folienschicht 2 selbst Barriereeigenschaften aufweist. Dies ist durch die geeignete Wahl des Kunststoffes möglich. Der Verbund kann neben dem bereits beschriebenen Aufbau weitere Schichten aufweisen. Die Barrierefunktion des Verbundes kann auch ein Vergilben der Verbundoberfläche verhindern.

Durch unterschiedliche Wärmeausdehnungskoeffizienten der einzelnen Folienschichten 2 und 3 kann eine Ausgestaltung erzielt werden, bei der die Schicht 3 einen größeren Wärmeausdehnungskoeffizienten aufweist als die Schicht 2. Hierdurch werden zumindest die Ränder des Verbundes 1 gegen die bituminöse Masse 31 gedrückt, wodurch ein versehentliches Ablösen verhindert wird.

Fig 2 zeigt eine weitere Ausgestaltung eines Verbundes 21. Dieser weist zwei Folienschichten 2 und 3 auf. Wenigstens einer der beiden Schichten 2 und 3 ist aus einem Material gefertigt, welches Barriereeigenschaften gegenüber Ölen aufweist. Auf eine zusätzliche Barriereschicht kann damit verzichtet werden.

Die guten Barriereeigenschaften des Verbundes 1 bzw. 21 und die einstellbaren mechanischen Parameter ermöglichen einen sehr dünnen Verbundaufbau, wodurch sowohl das Handling der bituminösen Bahnen bei der Produktion als auch die Verarbeitung der Bahnen erheblich erleichtert wird. Z.B. verringert sich das Abfallvolumen gegenüber bisher eingesetzten Release-Linern aus Papier erheblich. Wird der Verbund z.B. als Polypropylen-Polyamid-Coexfolie ausgebildet, so entsprechen die mechanischen Eigenschaften des Verbundes bei einer Gesamtdicke von 25µm denen einer reinen Polypropylen-Folie bei 50µm. Es ist denkbar, daß der Verbund in einer Dicke zwischen 5 und 100µm, je nach Anforderungen, gefertigt wird.

## Patentansprüche

1. Verwendung eines Folien-Verbundes(1) mit wenigstens zwei Schichten als Releasefolie für bituminöse Bahnen(21), wobei wenigstens die beiden Folienschichten(2,3) aus unterschiedlichen Materialien, nämlich aus einem Polyolefin, aus Polypropylen, aus Polyamid, aus Polyethylenterephtalat, aus Polyacrylnitril und/oder aus einer Mischung oder einem Blend dieser Stoffe bestehen, wobei wenigstens eine Seite des Verbundes gering haftend ausgerüstet ist, wobei wenigstens eine der Folienschichten des Verbundes als Barriere gegen insbesondere mineralische Öle ausgebildet ist.

2. Verwendung eines Folien-Verbundes nach Anspruch 1, wobei die Folienschichten einen unterschiedlichen Wärmeausdehnungskoeffizienten aufweisen.

3. Verwendung eines Folien-Verbundes nach Anspruch 2, wobei eine weiter von der wenig haftenden Oberfläche entfernt liegende Folienschicht einen größeren Längenausdehnungskoeffizienten aufweist als eine näher liegende Folienschicht.

4. Verwendung eines Folien-Verbundes nach Anspruch 1, 2 oder 3, wobei die PET-Schicht orientiert ist.

5. Verwendung eines Folien-Verbundes nach einem der vorangehenden Ansprüche, wobei wenigstens eine Seite des Verbundes mit Silikon(5) ausgerüstet ist.

6. Verwendung eines Folien-Verbundes nach einem der vorangehenden Ansprüche, wobei das Antihaftmittel auf den Verbund beschichtet ist.

7. Verwendung eines Folien-Verbundes nach einem der vorangehenden Ansprüche, wobei das Antihaftmittel in die äußerste Folienschicht eingebracht ist.

8. Verwendung eines Folien-Verbundes nach einem der vorangehenden Ansprüche, wobei zwischen zwei aufeinander folgenden Schichten eine Barriereschicht(4) insbesondere für Öle, Sauerstoff und/oder UV Strahlung vorgesehen ist.

9. Verwendung eines Folien-Verbundes nach einem der vorangehenden Ansprüche, wobei eine Lackschicht als Barriere insbesondere für Öle, Sauerstoff und/oder UV Strahlung vorgesehen ist.

10. Verwendung eines Folien-Verbundes nach einem der vorangehenden Ansprüche, wobei die einzelnen Folienschichten(2,3) nach ihrer thermischen Stabilität kombiniert sind.

11. Verwendung eines Folien-Verbundes nach einem der vorangehenden Ansprüche, wobei die einzelnen Folienschichten(2,3) nach ihrer mechanischen Festigkeit kombiniert sind.

12. Verwendung eines Folien-Verbundes nach einem der vorangehenden Ansprüche, wobei die einzelnen Folienschichten(2,3) nach ihren Spleissempfindlickeiten und/oder Weiterreisseigenschaften kombiniert sind.

13. Verwendung eines Folien-Verbundes nach einem der vorangehenden Ansprüche, wobei zwischen zwei aufeinander folgenden Schichten ein Haftvermittler und/oder Kleber vorgesehen ist.

14. Verwendung eines Folien-Verbundes nach einem der vorangehenden Ansprüche, **dadurch gekennzeichnet, daß** der Verbund als Releasefolie für selbstklebende Abdichtbahnen, insbesondere Dachbahnen(22) oder dgl. vorgesehen ist.

15. Verwendung eines Folien-Verbundes nach einem der vorangehenden Ansprüche, **dadurch gekennzeichnet, daß** der Verbund als Releasefolie für Schweißbahnen, insbesondere mit selbstklebend ausgerüsteter Überlappung, vorgesehen ist.

## Claims

1. Use of a film combination (1) with at least two layers as a release film for bituminous membranes (21), where at least the two film layers (2, 3) consist of different materials, i.e. polyolefin, polypropylene, polyamide, polyethylene terephthalate, polyacrylonitrile and/or a mixture or blend of these materials, where at least one side of the combination is treated so that it has low bonding properties and where at least one layer of the film combination is configured to provide a barrier against mineral oils in particular.

2. Use of a film combination according to claim 1, where the film layers have different coefficients of thermal expansion.

3. Use of a film combination according to claim 2, where a film layer located further away from the surface with low bonding properties has a larger coefficient of elongation than a film layer that is located closer.

4. Use of a film combination according to claim 1, 2 or 3, where the PET layer is oriented.

5. Use of a film combination according to one of the previous claims, where at least one side of the film combination is treated with silicone (5).

6. Use of a film combination according to one of the previous claims, where the anti-bonding agent is applied to the film combination by coating.

7. Use of a film combination according to one of the previous claims, where the anti-bonding agent is incorporated in the outermost film layer.

8. Use of a film combination according to one of the previous claims, where a barrier layer (4) particularly against oils, oxygen and/or UV radiation is provided between two adjacent layers.

9. Use of a film combination according to one of the previous claims, where a layer of lacquer is provided as the barrier particularly against oils, oxygen and/or UV radiation.

10. Use of a film combination according to one of the previous claims, where the individual film layers (2, 3) are combined on the basis of their thermal stability.

11. Use of a film combination according to one of the previous claims, where the individual film layers (2, 3) are combined according to their mechanical strength.

12. Use of a film combination according to one of the previous claims, where the individual film layers (2, 3) are combined according to their susceptibility to initial tearing and/or their tear propagation properties.

13. Use of a film combination according to one of the previous claims, where a tie layer and/or adhesive is provided between two adjacent layers.

14. Use of a film combination according to one of the previous claims, **wherein** the film combination is provided as a release film for self-adhesive sealing membranes, particularly roofing membranes (22) or similar products.

15. Use of a film combination according to one of the previous claims, **wherein** the film combination is provided as a release film for welded membranes, particularly when they have overlap areas that are treated to be self-adhesive.

## Revendications

1. Utilisation d'une feuille multicouche (1) comprenant au moins deux couches en tant que feuille anti-adhésive pour bandes bitumeuses (21), dans laquelle au moins les deux couches de feuille (2, 3) se composent de matériaux différents, à savoir d'une polyoléfine, de polypropylène, de polyamide, de téréphtalate de polyéthylène, de polyacrylonitrile et/ou d'un mélange de ces substances, au moins une face de la structure multicouche étant apprêtée de façon à présenter une faible adhésivité et au moins l'une des couches de feuille de la structure multicouche étant réalisée en tant que barrière s'opposant en particulier aux huiles minérales.

2. Utilisation d'une feuille multicouche selon la revendication 1, les couches de feuille présentant des coefficients de dilatation thermique différents.

3. Utilisation d'une feuille multicouche selon la revendication 2, une couche de feuille plus éloignée de la surface peu adhésive présentant un coefficient d'extension en longueur supérieur à celui d'une couche de feuille plus proche.

4. Utilisation d'une feuille multicouche selon la revendication 1, 2 ou 3, la couche de PET étant orientée.

5. Utilisation d'une feuille multicouche selon l'une quelconque des revendications précédentes, au moins une face de la structure multicouche étant munie de silicone (5).

6. Utilisation d'une feuille multicouche selon l'une quelconque des revendications précédentes, la structure multicouche étant revêtue de l'agent d'anti-adhésivité.

7. Utilisation d'une feuille multicouche selon l'une quelconque des revendications précédentes, l'agent d'anti-adhésivité étant incorporé dans la couche de feuille la plus extérieure.

8. Utilisation d'une feuille multicouche selon l'une quelconque des revendications précédentes, une couche barrière (4) étant prévue entre deux couches se succédant, en particulier pour des huiles, de l'oxygène et/ou du rayonnement ultraviolet.

9. Utilisation d'une feuille multicouche selon l'une quelconque des revendications précédentes, une couche de peinture étant prévue en tant que barrière, en particulier pour des huiles, de l'oxygène et/ou du rayonnement ultraviolet.

10. Utilisation d'une feuille multicouche selon l'une quelconque des revendications précédentes, les couches de feuille individuelles (2, 3) étant combinées en fonction ou selon leur stabilité thermique.

11. Utilisation d'une feuille multicouche selon l'une quelconque des revendications précédentes, les couches de feuille individuelles (2, 3) étant combinées en fonction ou selon leur résistance mécanique.

12. Utilisation d'une feuille multicouche selon l'une quelconque des revendications précédentes, les couches de feuille individuelles (2, 3) étant combinées en fonction ou selon leur sensibilité à l'épissure et/ou de leurs propriétés de propagation du déchirement.

13. Utilisation d'une feuille multicouche selon l'une quelconque des revendications précédentes, un agent d'adhésivité et/ou une colle étant prévu(e) entre deux couches se succédant.

14. Utilisation d'une feuille multicouche selon l'une quelconque des revendications précédentes, **caractérisée en ce que** la structure multicouche est prévue en tant que feuille anti-adhésive pour bandes d'étanchéité autocollantes, en particulier pour des bandes de toiture (32) ou similaires.

15. Utilisation d'une feuille multicouche selon l'une quelconque des revendications précédentes, **caractérisée en ce que** la structure multicouche est prévue en tant que feuille anti-adhésive pour bandes à souder, en particulier celles munies d'un joint de recouvrement autocollant.
